# FASCICULE DE BREVET EUROPEEN

(11) **EP 2 686 237 B1**
(45) Date de publication et mention de la délivrance du brevet: **16.08.2017**
(21) Numéro de dépôt: 12711224.1
(22) Date de dépôt: 07.03.2012
(51) Int. Cl.: B64B 1/04, B64B 1/62

(54) **AÉROSTAT DIRIGEABLE À PROFIL VARIABLE COMMANDÉ**
LUFTFAHRZEUG, LEICHTER ALS LUFT MIT VORRICHTUNG ZUR VERÄNDERUNG DER FORM DER AUSSENHÜLLE
LIGHTER THAN AIR AIRCRAFT WITH ACTIVELY CONTROLLED SHAPE

(30) Priorité: 15.03.2011 FR 1100774
(43) Date de publication de la demande: 22.01.2014
(73) Titulaire: Voliris, 03400 Yzeure (FR)
(72) Inventeur: BERNARD, Alain, 75016 Paris (FR)
(74) Mandataire: Gabriel, Franck
(86) Numéro de dépôt international: PCT/IB2012/000417
(87) Numéro de publication internationale: WO 2012/123793

(56) Documents cités:
- DE-A1- 10 241 567
- FR-A- 442 295
- FR-A1- 2 927 307
- US-A- 3 446 457
- US-A1- 2009 200 417

## Description

### DOMAINE TECHNIQUE DE L'INVENTION

La présente invention concerne un aérostat dirigeable. Elle concerne plus particulièrement un aérostat dirigeable comprenant une enveloppe souple délimitant un espace intérieur susceptible d'être rempli par un gaz porteur, l'enveloppe présentant au moins une zone d'ajustement pourvue d'un premier élément longitudinal d'ajustement fixé sur un premier côté de l'enveloppe et un second élément longitudinal d'ajustement fixé de l'autre côté de l'enveloppe.

### ETAT DE LA TECHNIQUE ANTERIEURE

Divers exemples d'aérostats avec enveloppe à volume variable sont connus. Par exemple, le document FR 2 802 172 décrit un dispositif permettant aux enceintes à volume variable des dirigeables de se replier en transmettant continuellement la portance de l'hélium à la structure de l'appareil. Il est constitué par une enveloppe extérieure contenant une enceinte en forme de cardioïde repliable par la traction d'un treuil et d'un laçage de câbles supporté par des poutres à poulies multiples. Un compresseur d'hélium et une vanne sont interposés entre les volumes (V1) et (V2) des ballasts. Lorsque l'on veut diminuer la portance de l'hélium celui-ci est refoulé dans les ballasts et le volume du gaz comprimé est maintenu par la vanne. Le treuil replie proportionnellement l'enceinte (V2) en maintenant constante la tension dans les câbles porteurs. L'air extérieur qui compense la différence de volume (V3) entre l'enceinte repliable (V2) et l'enveloppe est admis au travers d'échangeur afin de réguler sa température. Dans le dispositif décrit, la vanne est une vanne dont la section de passage est strictable par un dispositif pneumatique. Ce dispositif est bien adapté aux dirigeables pour effectuer les manoeuvres de montée et de descente. Cependant, ce dispositif est complexe et lourd du fait de sa construction avec double enveloppe, à savoir une enveloppe externe rigide, et une enveloppe interne souple. Le cheminement du câble le long de l'enveloppe est susceptible d'engendrer des plis sur celle-ci, voire d'affecter ses caractéristiques d'imperméabilité. Par ailleurs, le laçage avec câble unique implique un câble relativement long, cheminant sur toute la périphérie de l'enveloppe, présentant ainsi un risque élevé de création de tensions et/ou frottements, résultant en un fonctionnement non uniforme et non constant. Par ailleurs, le dimensionnement d'un câble long et unique est susceptible de requérir un câble plus résistant, donc plus lourd et/ou plus coûteux. Enfin, en cas de frottement plus intense causant un éventuel dysfonctionnement, le mode de fonctionnement à géométrie variable pourrait être temporairement indisponible.

La demande de brevet FR 2 927 307 propose un aérostat dirigeable à enveloppe souple, comprenant au moins un ensemble permettant la variation de la géométrie de l'enveloppe durant le vol. L'ensemble comporte:
- une structure de renfort supérieure fixée sur la paroi supérieure d'enveloppe, et faisant saillie dans l'espace intérieur;
- une structure de renfort inférieure fixée sur la paroi inférieure d'enveloppe, et faisant saillie dans l'espace; et
- des moyens de liaison agencés dans l'espace qu'ils traversent, ces moyens reliant la structure de renfort supérieure à la structure de renfort inférieure étant conçus de manière à permettre, durant le vol, une variation de l'écartement entre ces deux structures. Dans une variante, il est prévu d'utiliser un câble unique reliant les deux renforts, un treuil permettant d'enrouler ou de dérouler le câble générant la variation de géométrie de façon commandée. Ici encore, du fait qu'il s'agit d'un aérostat de volume considérablement important, l'utilisation d'un câble unique sur toute la longueur est susceptible de créer des zones de frottement ou de contraintes, rendant le fonctionnement instable ou irrégulier. Le dimensionnement du câble unique, devant résister à une tension relativement forte, est aussi susceptible de causer des handicaps de masse et/ou de coûts.

Le document US 2009200417 décrit un dirigeable à long rayon d'action et adapté pour voler à une altitude élevée dont la surface supérieure est adaptée pour émettre des radiations infrarouges tandis que la face inférieure est adaptée pour absorber les radiations infrarouges. La configuration de l'ensemble permet d'obtenir une aile volante à épaisseur variable.

Le document US 3 446 457 décrit un dirigeable à expansion/contraction pourvu d'une pluralité de rayons reliant un arbre central à la surface variable du dirigeable. La rotation de l'arbre permet de régler la longueur des rayons et par le fait même le volume de l'enceinte gonflée.

Le document DE 10241567 décrit un dirigeable compressible configuré avec un support central relié par des câbles à une enveloppe externe. Des enrouleurs de câbles permettent de faire varier la longueur entre le support central et l'enveloppe externe.

Ces différents exemples de dirigeables montrent des solutions complexes et coûteuses à mettre en oeuvre.

Pour pallier ces différents inconvénients, l'invention prévoit différents moyens techniques.

### EXPOSE DE L'INVENTION

Tout d'abord, un premier objet de l'invention consiste à prévoir un aérostat dirigeable avec enveloppe à géométrie variable permettant une utilisation fiable, sécuritaire, dans un maximum de configurations et de conditions météorologiques.

Un autre objet de l'invention consiste à prévoir un aérostat dirigeable avec enveloppe à géométrie variable commandée, pour permettre de faire varier la géométrie dans diverses configurations, tel qu'en vol, pour optimiser les opérations de montée et descente ou optimiser le profil aérodynamique, ou au sol, par exemple pour permettre de placer l'aérostat dans un hangar de hauteur limitée.

Un autre objet de l'invention consiste à prévoir un aérostat dirigeable présentant des caractéristiques de poids les plus avantageuses possibles, sans affecter la sécurité.

Pour ce faire, l'invention prévoit un aérostat dirigeable comprenant une enveloppe souple délimitant un espace intérieur susceptible d'être rempli par un gaz porteur, l'enveloppe présentant au moins une zone d'ajustement pourvu d'un premier élément longitudinal d'ajustement fixé sur un premier côté de l'enveloppe et un second élément longitudinal d'ajustement fixé de l'autre côté de l'enveloppe, les deux éléments d'ajustement étant montés en opposition, mobiles l'un par rapport à l'autre entre une position d'éloignement maximal et une position d'éloignement minimal, les deux éléments longitudinaux d'ajustement étant reliés l'un à l'autre par un ensemble comprenant une pluralité de câbles traversant l'espace intérieur, chacun des câbles coopérant de façon coulissante avec une pluralité de points de serrage prévus le long de chaque élément longitudinal, les câbles étant connectés à un treuil susceptible d'exercer une action serrage ou de desserrage des câbles afin de rapprocher ou d'éloigner l'un de l'autre les deux éléments longitudinaux d'ajustement, le treuil étant monté de façon flottante et comprenant un moteur couplé à au moins un réducteur couplé(s) à une pluralité de roues permettant d'enrouler ou dérouler les câbles de l'ensemble, les multiples forces de tension des câbles de l'ensemble et le taux de réduction du ou des réducteur(s) étant prévus de façon à permettre de compenser l'effet de couple induit par le moteur, de façon à maintenir l'équilibre de l'ensemble dans le plan des câbles.

Selon une telle architecture, l'ajustement de la position relative des membres longitudinaux d'ajustement peut être effectuée sur demande, au besoin, afin d'optimiser la configuration de vol, ou au sol. L'agencement multicâbles permet de positionner le module de serrage à un emplacement optimal, en outre pour éviter les trop grandes longueurs de câbles, pour mieux gérer la répartition des forces, et pour permettre, le cas échéant, de positionner plusieurs modules de serrage, par exemple un module par câble.

Selon un mode de réalisation avantageux, les diamètres des roues sont établis de façon à permettre un équilibrage des tensions des câbles.

Selon encore un autre mode de réalisation avantageux, le treuil comporte deux axes entrainés par un moteur unique monté entre les axes.

Selon une variante de réalisation avantageuse, une pluralité de roues sont montées de façon coaxiale.

Selon un autre mode de réalisation avantageux, le treuil est disposé sensiblement entre les laçages de câbles de l'ensemble.

Le treuil comporte de préférence un réducteur à vis sans fin avec une démultiplication suffisante pour conserver des forces sensiblement équilibrées au niveau du module de serrage : le treuil s'appuyant sur le plan des câbles, un équilibrage ne serait possible sans une forte démultiplication, le plan des câbles n'étant pas entrainé en rotation en sens contraire du sens de rotation du moteur. Le taux de démultiplication dépend de nombreux paramètres, et notamment de la puissance du moteur. Dans un exemple de réalisation, on prévoit une rotation moteur de 900 tr/min pour une rotation des roues de 4tr/min, soit une démultiplication de l'ordre de 1 :200. D'autres taux, inférieurs ou supérieurs à 1 :200 peuvent être prévus, selon les cas.

Compte tenu de l'imposant volume de la voilure, les risques de création de zones de contraintes dues à la présence de frottements sont multiples. Un agencement équilibré permet de minimiser les risques de déséquilibres lors de la mise en oeuvre.

Le montage libre du treuil par rapport aux deux éléments longitudinaux permet, en plus des gains de poids liés à la suppression des éléments de fixation du treuil, une mise en oeuvre uniforme de la variation de géométrie, évitant qu'une zone ne se déforme plus ou moins rapidement qu'une autre.

Egalement de manière avantageuse, les câbles sont montés coulissants aux points de serrage. Le mode coulissant peut être obtenu soit par glissement des câbles contre un point de pivot, ou par roulement le long d'une roulette agissant comme poulie.

Selon une variante non revendiquée, le treuil est connecté par des éléments de fixation. Ce type de montage permet d'éviter tout déportement ou changement de position du treuil lors d'une action de serrage ou desserrage si l'équilibre des forces venait à être rompus, que ce soit pour une durée courte ou de façon prolongée. Les éventuelles collisions entre le treuil et l'enveloppe ou les éléments longitudinaux sont ainsi évitées. Les éléments de fixation peuvent être rigides, semi-rigides, ou non rigides. On peut ainsi utiliser des tiges, des câbles, des cordes, des élastiques, ou autres.

Selon une autre variante de réalisation, le treuil comporte des paires de roues de diamètres sensiblement identiques, pour enroulement de paires de câbles (par exemple, l'ensemble de câbles comporte trois paires de câbles montés sur trois paires de roues). Dans un tel cas, les paires de roues comportent avantageusement des diamètres distincts.

Selon encore une autre variante de réalisation, les éléments longitudinaux d'ajustement comportent des zones de souplesse.

De manière avantageuse, le treuil comprend un moteur électrique antidéflagrant. On peut ainsi utiliser ce type d'agencement avec tout type de gaz porteur, incluant l'hydrogène.

Selon encore une autre variante de réalisation, au moins un vérin ou au moins un frein coopérant avec un des câbles est adapté pour faire varier la tension dudit câble.

Selon une autre variante de réalisation, l'aérostat dirigeable comporte deux zones d'ajustement sensiblement parallèles l'une par rapport à l'autre. Les deux zones sont de préférence sensiblement parallèles à l'axe longitudinal de l'aérostat.

Selon encore un autre mode de réalisation, l'aérostat dirigeable comporte également des caractéristiques d'un aérodyne. L'aéronef hybride résultant peut ainsi évoluer selon diverses configurations de vol s'apparentant tantôt aux caractéristiques d'un aérostat dirigeable, tantôt à un aérodyne. En outre, le profil effilé de l'enveloppe, en forme d'aile, permet l'atteinte de vitesses sensiblement plus élevées que pour un aérostat conventionnel, de forme « cigaroïde ».

### DESCRIPTION DES FIGURES

Tous les détails de réalisation sont donnés dans la description qui suit, complétée par les figures 1 à 10, présentées uniquement à des fins d'exemples non limitatifs, et dans lesquelles:
- la figure 1 est une représentation schématique d'un aérostat dirigeable selon l'invention;
- la figure 2A est une coupe d'une section transversale de l'aérostat de la figure 1 ;
- la figure 2B est une coupe d'une section transversale de l'aérostat de la figure 1 illustrant schématiquement un exemple de variation de géométrie ;
- la figure 3 est une coupe schématique d'une section longitudinale d'un exemple de réalisation d'aérostat dirigeable selon l'invention au niveau d'une des zones d'ajustement, montrant les éléments longitudinaux d'ajustement, l'ensemble de câbles et le module de serrage ;
- la figure 4 est une vue agrandie de la portion centrale de la figure 3, montrant de façon plus précise les détails d'agencement du dispositif de variation de géométrie selon l'invention ;
- la figure 5 est une vue agrandie de la portion de gauche de la figure 3, montrant de façon plus précise les détails d'agencement du dispositif de variation de géométrie selon l'invention ;
- la figure 6 est une vue agrandie de la portion de droite de la figure 3, montrant de façon plus précise les détails d'agencement du dispositif de variation de géométrie selon l'invention ;
- les figures 7 et 8 sont des vues en perspective d'un exemple de module de serrage prenant la forme d'un treuil pourvu d'une pluralité de roues d'enroulement ;
- la figure 9 est une vue agrandie de la portion centrale de la figure 3, montrant de façon schématique une variante de réalisation dans laquelle le module de serrage est fixé à un élément longitudinal d'ajustement ;
- la figure 10 est une vue agrandie de la portion centrale de la figure 3, montrant de façon schématique une autre variante de réalisation dans laquelle le module de serrage est fixé aux deux éléments longitudinaux d'ajustement.

### DESCRIPTION DETAILLEE DE L'INVENTION

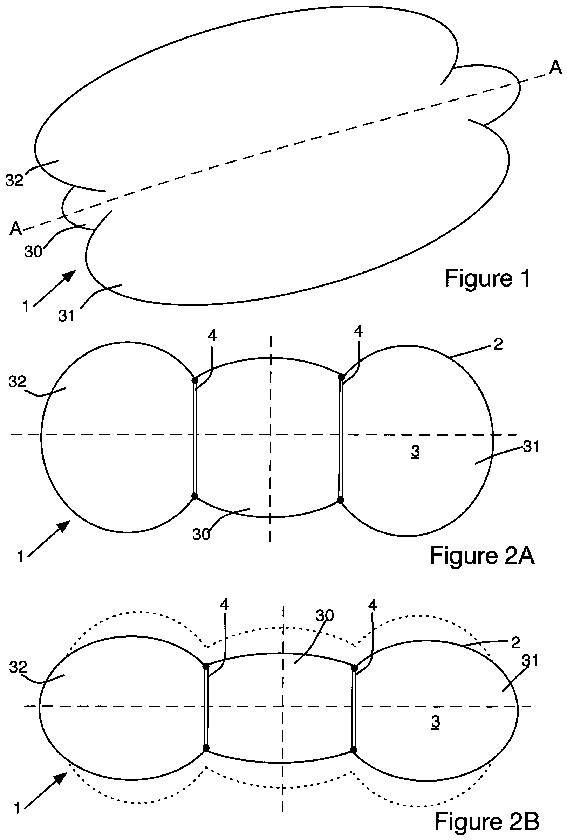

La figure 1 illustre un exemple de réalisation d'un aérostat dirigeable 1 de forme sensiblement allongée, avec un lobe principal 30 disposé centralement et s'étendant le long d'un axe longitudinal A-A, et deux lobes latéraux 31, 32, coopérant avec le lobe central. Les lobes voisins coopèrent ensemble de façon à ce que l'espace intérieur 3 soit continu et unique pour les trois lobes. La figure 2A montre une coupe transversale du dirigeable, dévoilant un exemple de profil formé par l'architecture trilobée. Le dirigeable est ainsi de forme sensiblement plane.

La figure 2B montre que ce profil peut être plus ou moins plat, selon les besoins. Par exemple, pour effectuer une montée en altitude, le volume de l'espace intérieur 3 est avantageusement augmenté, avec un apport additionnel de gaz porteur. En descente, il est utile de pouvoir diminuer ce volume, par exemple en aplatissant le profil, tel qu'illustré à la figure 2B.

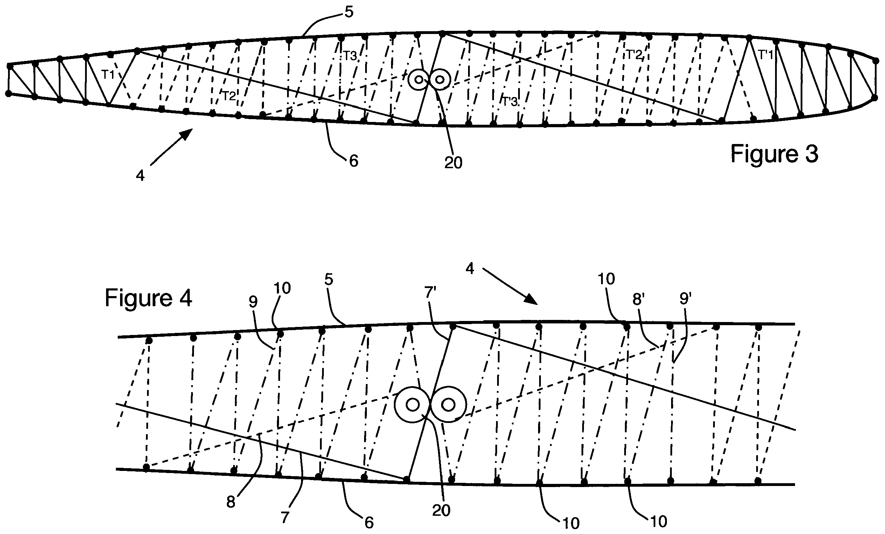

Pour commander les variations de volume, des zones d'ajustements 4 sont prévues, dans cet exemple dans la zone d'intersection entre le lobe central 30 et les lobes latéraux 31 et 32. Les figures 3 à 6 illustrent les détails de réalisation d'une des zones d'ajustement 4. Un premier élément longitudinal d'ajustement 5, disposé dans la portion supérieure de l'enveloppe gonflée en position de vol normal, s'étend longitudinalement, sensiblement parallèle à l'axe A-A. De façon sensiblement symétrique, un second élément longitudinal d'ajustement 6, disposé dans la portion inférieure de l'enveloppe gonflée en position de vol normal, s'étend aussi longitudinalement, en alignement vertical avec le premier élément longitudinal. Ces deux éléments forment ensemble un profil allongé, similaire à un profil d'aile. Les éléments longitudinaux d'ajustement 5 et 6 peuvent être en alliage métallique (aluminium, titane ou autre), en composite (de préférence fibré), ou en bois, selon les dimensions impliquées et les contraintes de forces à prendre en compte, et selon l'usage prévu pour l'aérostat. Pour assurer la rigidité de l'enveloppe de l'aérostat, les éléments 5 et 6 sont de préférence sensiblement rigides. En variante, au moins un des éléments comporte au moins une zone dite « souple », comportant des caractéristiques de déformabilité plus élevées que les zones dites « rigides ».

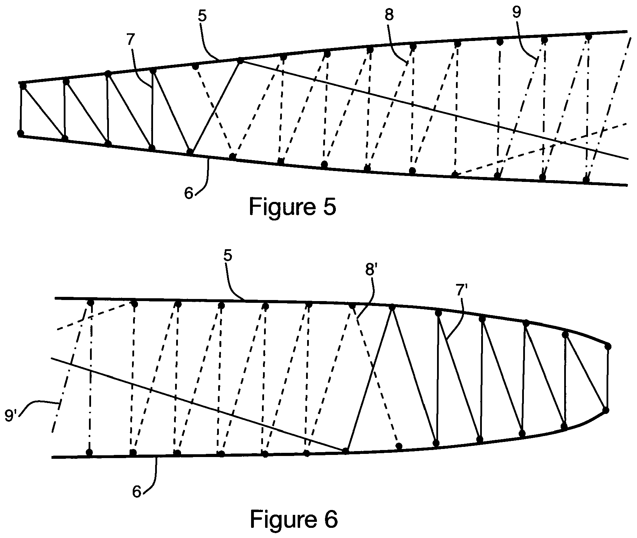

Pour maintenir, et/ou pour faire varier l'écartement entre les deux éléments 5 et 6, des paires de câbles 7, 7', 8, 8' et 9, 9' sont prévues, connectés en alternance à une pluralité de points sur chacun des éléments, formant un laçage. Dans l'exemple illustré, les câbles sont agencés par paires, chaque membre d'une paire étant disposé d'un côté du profil allongé formé par les deux éléments d'ajustement 5 et 6. Chacun des câbles est lacé uniquement sur une portion restreinte du profil allongé. Par exemple, le câble 7 ainsi que le câble 7' permettent de relier entre elles les zones d'extrémité gauche et droite du profil allongé formé par les éléments 5 et 6, tel que montré aux figures 3 et 5. Les câbles 9 et 9' permettent de relier les zones adjacentes au point central de l'ensemble, et les câbles 8 et 8' permettent de relier les zones intermédiaires, entre les câbles médiants et d'extrémité, tel que montré aux figures 3, 5 et 6. Chaque câble a une de ses extrémités attachée de façon fixe à un des éléments 5 ou 6, à sa position la plus éloignée du point central. L'autre extrémité de chaque câble est reliée à un module de serrage 20, prévu dans la zone centrale de l'ensemble.

Cet agencement est spécifiquement prévu pour permettre au module de serrage 20 de tendre les câbles pour procéder à un rapprochement des éléments d'ajustement 5 et 6 l'un vers l'autre, ou de les détendre, pour permettre aux éléments de s'écarter l'un de l'autre. Pour faciliter la mise en oeuvre du dispositif, les paires de câbles sont de préférence agencées de façon à ce que les tensions soient sensiblement égales et opposées. Par exemple, dans l'exemple illustré à la figure 3, les tensions T1 et T'1 sont sensiblement égales et opposées, les tensions T2 et T'2 sont sensiblement égales et opposées, et les tensions T3 et T'3 sont sensiblement égales et opposées. Pour faciliter le serrage ou le desserrage de l'ensemble, les câbles sont de préférence montés de façon coulissante aux multiples points de serrage 10 entre le module de serrage 20 et le dernier point de serrage, ce denier étant un point d'attache fixe.

Le module de serrage 20 peut prendre diverses formes, selon les modes de réalisation. Dans l'exemple illustré, le module de serrage 20 est monté flottant dans la zone sensiblement médiane du profil allongé. Son maintien en place et en équilibre tient au fait que les paires de câbles sont prévues pour s'équilibrer tel que préalablement évoqué. Ainsi, dans l'exemple illustré, trois paires de câbles sont disposées, avec un membre de chaque paire de chaque côté du module de serrage 20. Les membres de chaque paire sont agencés le long des éléments longitudinaux 5 et 6 de façon à obtenir un équilibrage des forces de chaque côté. Par ailleurs, tel que montré en particulier aux figures 3 et 4, le module de serrage est maintenu en stabilité grâce à une configuration des câbles selon de multiples points d'arrivée au niveau du module 20. Les câbles 8 et 8', avec T2 et T'2, génèrent des forces sensiblement latérales opposées ; les câbles 7 et 7', avec T1 et T'1, génèrent des forces sensiblement verticales opposées, et les câbles 9 et 9' avec T3 et T'3, génèrent des forces sensiblement verticales opposées.

Selon diverses variantes de réalisation, l'équilibre des forces est obtenu de diverses façons, par exemple en utilisant un nombre différent de paires de câbles, et/ou en les répartissant de façon différente le long du profil allongé, et/ou en ajustant les positions des points de serrage 10, et/ou avec des agencements symétriques de chaque côté du module de serrage (longueur de câbles, nombre et positions des points de serrage, etc).

Les câbles, ou les éléments de serrage 10, peuvent être munis de capteur de tension, permettant de mesurer et de comparer les tensions présentes au niveau des différents câbles. Pour conserver l'équilibre, on utilise avantageusement un ou plusieurs vérins d'ajustement, prévus entre les éléments de serrage 10 et les éléments longitudinaux d'ajustement. Ces vérins permettent d'ajuster localement la tension d'un câble, soit pour effectuer un rééquilibrage, soit pour permettre de repositionner le module de serrage 20. Dans une variante, les vérins sont remplacés par des freins, agissant au niveau des câbles soit pour créer un rééquilibrage, soit pour repositionner le module 20. Les vérins ou les freins sont de préférence électriques, actionnables à distance (depuis la nacelle ou par un pilote au sol), et reliés à une source d'alimentation logée par exemple sur la nacelle de l'aérostat.

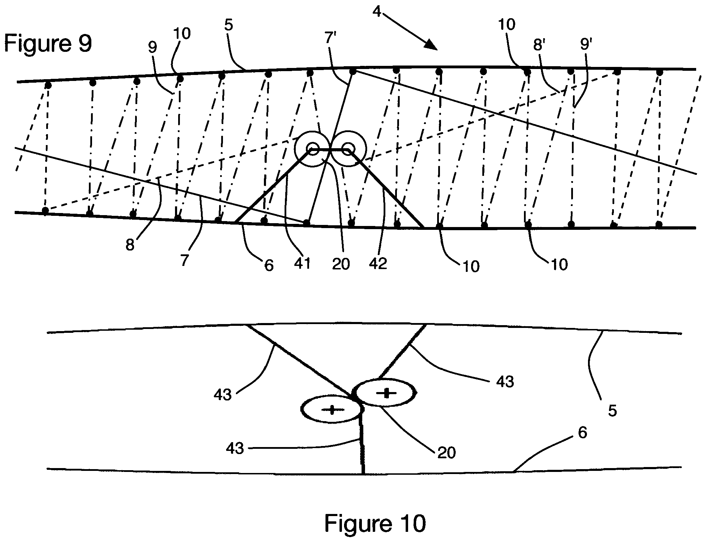

Selon l'invention, d'autres agencements sont prévus, dans lesquels le module de serrage est attaché à au moins un des éléments longitudinaux d'ajustement 5 ou 6, tel que montré par exemple à la figure 9. Des éléments de fixation, comme par exemple des tiges ou barres de maintien 41 et 42, sont fixées d'une part à un des éléments longitudinaux d'ajustement 5 ou 6 et d'autre part au module de serrage 20. Dans l'exemple de la figure 9, les tiges sont fixées à l'élément 5. D'autres points ou zones de fixation peuvent être prévus pour réaliser un montage dans lequel les modules de serrage sont fixés. Les nombres et dimensions des tiges peuvent aussi être modifiés.

La figure 10 montre de façon schématique un exemple d'une variante de réalisation d'une configuration avec un module de serrage 20 fixé entre deux éléments longitudinaux d'ajustement à l'aide d'éléments de fixation 43 coopérant de part et d'autre avec les éléments longitudinaux d'ajustement. Dans une telle configuration, on utilise avantageusement des éléments de fixation peu ou pas rigides, et éventuellement élastiques, comme par exemple des élastiques. Un tel mode de réalisation permet de conserver un bon équilibrage statique et dynamique. De multiples autres modes de fixation des modules de serrage 20 peuvent être mis en oeuvre.

Dans les configurations où les modules de serrage 20 sont fixés, l'ensemble de câbles peut comprendre un agencement par paires tel que préalablement décrit, ou encore sans lesdites paires. Par exemple, une pluralité de câbles formant des laçages successifs le long du profil allongé, avec un module de serrage coopérant avec chacun des câbles, permet de mettre en oeuvre les fonctions de serrage/desserrage prévues. Selon un tel agencement, on prévoit par exemple deux ou trois câbles, ou quatre câbles, ou cinq câbles, ou même plus, chacun étant monté en coopération avec un module de serrage. Les multiples modules sont alors synchronisés pour permettre des actions uniformes le long du profil allongé.

Les câbles utilisés sont de types connus, soit textiles ou métalliques, selon les forces en jeu et les contraintes de poids à respecter. Le fait d'utiliser plusieurs câbles permet de bien gérer différentes zones pouvant par exemple générer des tensions différentes. Les câbles multiples étant par ailleurs plus courts, les dimensionnements sont aussi plus aisés à déterminer, et des câbles de diamètres plus petits peuvent être utilisés.

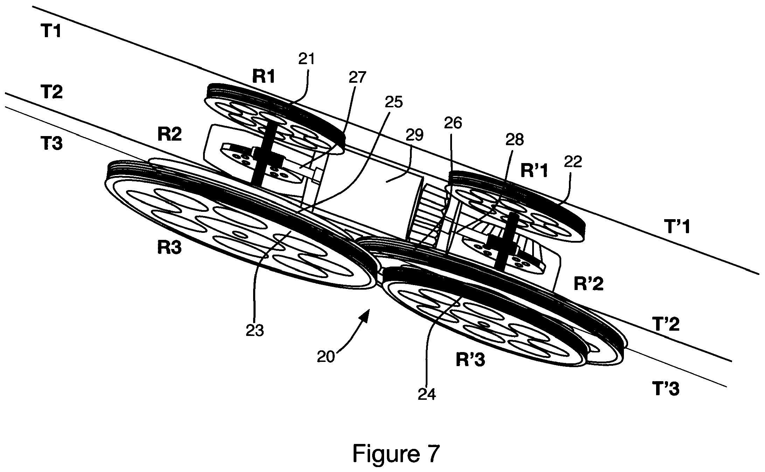

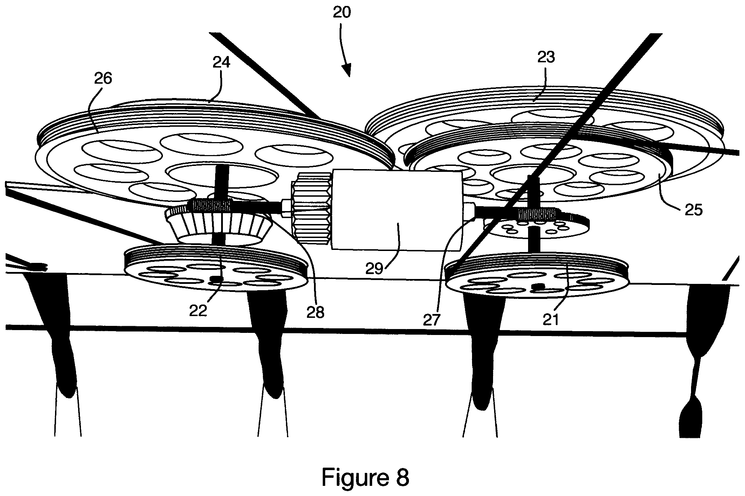

Les figures 7 et 8 illustrent un exemple avantageux d'un module de serrage 20 prenant la forme d'un treuil. Un tel treuil comporte au moins deux roues ou poulies entrainées dans des sens différents par un ou plusieurs motoréducteurs à vis sans fin couplés entre eux de façon mécanique ou électronique. Pour favoriser les caractéristiques dynamiques, on utilise avantageusement un réducteur à vis sans fin avec une forte démultiplication, permettant de minimiser l'effet de couple induit par la rotation, qui tend à entrainer le plan du module en sens contraire du sens de rotation du moteur. Les multiples forces de tension des câbles de l'ensemble peuvent ainsi fournir un appui contre lequel l'effet de couple peut s'exercer.

Dans l'exemple illustré, le treuil comporte deux axes d'entraînement 27 et 28 à roues multiples. L'axe 27 supporte trois roues, 21, 23, 25 de diamètres différents montées de façon coaxiale. L'axe 28 supporte aussi trois roues, 22, 24, 26 de diamètres différents montées de façon coaxiale. Chaque roue coopère avec un des câbles de l'ensemble 7 ou 7', 8 ou 8', 9 ou 9', pour enroulement ou déroulement, selon le mode souhaité, à savoir serrage ou desserrage de l'ensemble. Les axes 27 et 28 sont entrainés par un ensemble moteur électrique pourvu de vis sans fin. Dans cet exemple, les vis sont agencées de part et d'autre du moteur, ce dernier étant disposé entre les axes 27 et 28. Les vis peuvent être agencées dans le prolongement de l'arbre du moteur. Ce type de configuration permet l'obtention d'un module compact, léger, et bien adapté pour un montage flottant. En fonction des niveaux de tension souhaités et/ou des longueurs de câbles à enrouler, les diamètres des roues sont aisément adaptés. En outre, pour un montage flottant, les diamètres des roues sont établis de façon à permettre un équilibrage des tensions des câbles.

Le ou les moteurs sont de préférence à courant continu, avec une source d'alimentation logée par exemple au niveau de la nacelle de l'aérostat. Pour permettre l'utilisation de tout type de gaz porteur, y compris l'hydrogène, les moteurs sont de préférence antidéflagrants. Les moteurs sont prévus pour actionnement à distance, par exemple depuis la nacelle, ou encore par un pilote au sol.

Les Figures et leurs descriptions faites ci-dessus illustrent l'invention plutôt qu'elles ne la limitent. En particulier, l'invention et ses différentes variantes viennent d'être décrites en relation avec un exemple particulier comportant trois lobes. Néanmoins, il est évident pour un homme du métier que l'invention peut être étendue à d'autres modes de réalisation dans lesquels en variantes, on prévoit seulement deux lobes, ou encore plus de trois lobes. Par ailleurs, les exemples présentés montrent un treuil à moteur unique couplé à deux axes. Néanmoins, il est évident pour un homme du métier que l'invention peut être étendue à d'autres modes de réalisation dans lesquels en variantes, on prévoit deux moteurs, chacun étant couplé à un axe. Dans un tel exemple, pour contrer l'effet de couple induit par les moteurs, ceux-ci sont de préférence montés de façon à tourner en sens inverse. Une platine de support commune aux deux moteurs permet de réaliser un montage dynamiquement stable, en absorbant les efforts en jeu.

Les signes de références dans les revendications n'ont aucun caractère limitatif. Les verbes "comprendre" et "comporter" n'excluent pas la présence d'autres éléments que ceux listés dans les revendications. Le mot "un" précédant un élément n'exclue pas la présence d'une pluralité de tels éléments.

## Revendications

1. Aérostat dirigeable (1) comprenant une enveloppe souple (2) délimitant un espace intérieur (3) susceptible d'être rempli par un gaz porteur, l'enveloppe présentant au moins une zone d'ajustement (4) pourvu d'un premier élément longitudinal d'ajustement (5) fixé sur un premier côté de l'enveloppe et un second élément longitudinal d'ajustement (6) fixé de l'autre côté de l'enveloppe, les deux éléments d'ajustement (5, 6) étant montés en opposition, mobiles l'un par rapport à l'autre entre une position d'éloignement maximal et une position d'éloignement minimal, les deux éléments longitudinaux d'ajustement (5, 6) étant reliés l'un à l'autre par un ensemble comprenant une pluralité de câbles (7, 7', 8, 8', 9, 9') formant un plan de câbles et traversant l'espace intérieur (3), chacun des câbles (7, 7', 8, 8', 9, 9') coopérant de façon coulissante avec une pluralité de points de serrage (10) prévus le long de chaque élément longitudinal, les câbles étant connectés à un module de serrage (20) susceptible d'exercer une action serrage ou de desserrage des câbles afin de rapprocher ou d'éloigner l'un de l'autre les deux éléments longitudinaux (5, 6) d'ajustement,
**caractérisé en ce que** le module de serrage (20) est un treuil monté de façon flottante et comprend un moteur (29) couplé à au moins un réducteur couplé(s) à une pluralité de roues (20, 21, 22, 23, 34, 25, 26) permettant d'enrouler ou dérouler les câbles (7, 7', 8, 8', 9, 9') de l'ensemble, les multiples forces de tension des câbles de l'ensemble en fournissant un appui contre lequel l'effet de couple du moteur peut s'exercer, et le taux de réduction du ou des réducteur(s) étant prévus avec une forte démultiplication, permettant de minimiser l'effet de couple induit par la rotation du moteur, de façon à permettre de compenser l'effet de couple induit par le moteur, afin de maintenir l'équilibre du treuil dans ledit plan des câbles.

2. Aérostat dirigeable selon la revendication 1, dans lequel les diamètres des roues sont établis de façon à permettre un équilibrage des tensions des câbles.

3. Aérostat dirigeable selon l'une des revendications 1 ou 2, dans lequel le treuil est disposé sensiblement entre les laçages de câbles de l'ensemble.

4. Aérostat dirigeable selon l'une des revendications 1 à 3, dans lequel le treuil comporte deux axes (27, 28) entrainés par un moteur unique (29) monté entre les axes.

5. Aérostat dirigeable selon l'une des revendications précédentes, dans lequel une pluralité de roues sont montées de façon coaxiale.

6. Aérostat dirigeable selon l'une des revendications précédentes, dans lequel le treuil comporte un réducteur à vis sans fin.

7. Aérostat dirigeable selon l'une des revendications 1 à 6, dans lequel le treuil comporte des paires de roues de diamètres sensiblement identiques, pour enroulement de paires de câbles.

8. Aérostat dirigeable selon l'une des revendications 1 à 6, dans lequel les paires de roues comportent des diamètres distincts.

9. Aérostat dirigeable selon l'une des revendications précédentes, dans lequel le treuil comprend un moteur électrique (29) antidéflagrant.

10. Aérostat dirigeable selon l'une des revendications précédentes, dans lequel au moins un vérin ou au moins un frein coopérant avec un des câbles est adapté pour faire varier la tension dudit câble.

11. Aérostat dirigeable selon l'une des revendications précédentes, comportant deux zones d'ajustement (4) sensiblement parallèles l'une par rapport à l'autre.

12. Aérostat dirigeable selon la revendication 11, dans lequel les deux zones d'ajustement (4) sont sensiblement parallèles à l'axe longitudinal A-A de l'aérostat.

13. Aérostat dirigeable selon l'une des revendications précédentes, comportant par ailleurs les caractéristiques d'un aérodyne.

## Patentansprüche

1. Luftfahrzeug (1) mit einer flexiblen Hülle (2), die einen Innenraum (3) eingrenzt, welcher mit einem Trägergas gefüllt werden kann, wobei die Hülle mindestens eine Einstellzone (4) umfasst, welche mit einem ersten länglichen, auf einer ersten Seite des Gehäuses angebrachten Stellglied (5) und mit einem zweiten länglichen, auf der anderen Seite des Gehäuses angebrachten Stellglied (6) versehen ist, wobei die beiden Stellglieder (5, 6) in Bezug auf einander entgegengesetzt und beweglich zwischen einer Maximalabstandposition und einer Minimalabstandsposition angebracht sind, wobei die beiden Stellglieder (5, 6) miteinander durch einen Zusammenbau mit einer Vielzahl von Kabeln (7, 7', 8, 8', 9, 9') verbunden sind, welche eine Kabelebene bilden und sich durch den Innenraum (3) erstrecken, wobei jedes der Kabel (7, 7', 8, 8', 9, 9') mit einer Vielzahl von entlang jedes Längselements vorgesehenen Klemmstellen (10) auf gleitende Weise zusammenarbeitet, wobei die Kabel mit einem Klemmmodul (20) verbunden sind, welches eine Anzieh- oder Lösewirkung auf die Kabel auszuüben vermag, um die beiden länglichen Stellglieder (5, 6) zu einander oder weg von einander zu bewegen, **dadurch gekennzeichnet, dass** das Klemmmodul (20) eine Winde ist, welche auf schwimmende Weise montiert ist und einen Motor (29) umfasst, der mit mindestens einem Getriebe gekoppelt ist, welches an eine Vielzahl von Rädern (20, 21, 22, 23, 34, 25, 26) gekoppelt ist, zum Aufwickeln oder Abwickeln der Kabel (7, 7, 8, 8', 9, 9') des Zusammenbaus, wobei die Mehrfachspannkräfte der Kabel des Zusammenbaus eine Stütze bieten, gegen welche die Drehmomentwirkung des Motors ausgeübt werden kann, und wobei das Untersetzungsverhältnis des Getriebes oder der Getriebe mit einer starken Getriebeübersetzung vorgesehen ist, um die durch die Drehung des Motors induzierte Drehmomentwirkung minimieren zu können, damit die durch den Motor induzierte Drehmomentwirkung kompensiert werden kann, um so das Gleichgewicht der Winde in der besagten Kabelebene aufrechtzuerhalten.

2. Luftfahrzeug gemäss Anspruch 1, worin die Durchmesser der Räder eingestellt werden, um ein Ausgleichen der Spannungen der Kabel zu ermöglichen.

3. Luftfahrzeug gemäss einem der Ansprüche 1 oder 2, worin die Winde im Wesentlichen zwischen den Schnürungen von Kabeln des Zusammenbaus angeordnet ist.

4. Luftfahrzeug gemäss einem der Ansprüche 1 bis 3, worin die Winde zwei Achsen (27, 28) umfasst, welche von einem einzigen zwischen den Achsen montierten Motor (29) angetrieben werden.

5. Luftfahrzeug gemäss einem der vorhergehenden Ansprüche, worin eine Vielzahl von Rädern koaxial montiert ist.

6. Luftfahrzeug gemäss einem der vorhergehenden Ansprüche, worin die Winde ein Schneckengetriebe umfasst.

7. Luftfahrzeug gemäss einem der Ansprüche 1 bis 6, worin die Winde Paare von Rädern mit im Wesentlichen identischen Durchmessern umfasst, zur Wicklung von Kabelpaaren.

8. Luftfahrzeug gemäss einem der Ansprüche 1 bis 6, worin die Paare von Rädern unterschiedliche Durchmesser aufweisen.

9. Luftfahrzeug gemäss einem der vorangehenden Ansprüche, worin die Winde einen explosionsgeschützten Elektromotor (29) umfasst.

10. Luftfahrzeug gemäss einem der vorhergehenden Ansprüche, worin mindestens ein Stellantrieb oder mindestens eine mit einem der Kabel zusammenwirkende Bremse ausgelegt ist, um die Spannung des besagten Kabels zu variieren.

11. Luftfahrzeug gemäss einem der vorhergehenden Ansprüche, mit zwei Einstellzonen (4), welche im Wesentlichen parallel in Bezug zueinander sind.

12. Luftfahrzeug gemäss Anspruch 11, worin die beiden Einstellzonen (4) im Wesentlichen parallel zur Längsachse A-A des Luftfahrzeugs sind.

13. Luftfahrzeug gemäss einem der vorhergehenden Ansprüche, zudem mit den Merkmalen eines aerodynamischen Luftfahrzeugs.

## Claims

1. A dirigible airship (1) comprising a flexible envelope (2) defining an interior space (3) capable of being filled by a carrier gas, the envelope having at least one adjustment zone (4) provided with a first longitudinal adjustment element (5) secured to a first side of the envelope and a second longitudinal adjustment element (6) fastened to the other side of the envelope, wherein the two adjustment elements (5, 6) are mounted opposite one another, movable relative to one another between a position of maximum displacement and a position of minimum displacement, the two longitudinal adjustment elements (5, 6) being connected to each other by a plurality of cables (7, 7', 8, 8', 9, 9') forming a cable plane and passing through the interior space (3), each of the cables (7, 7', 8, 8', 9, 9') cooperating in a sliding manner with a plurality of clamping points (10) provided along each longitudinal element, the cables being connected to a tightening module (20) capable of exerting a tightening or loosening action of the cables in order to move the two longitudinal adjusting elements (5, 6) towards or away from one another,
**characterized in that** the tightening module (20) is a winch mounted in a floating manner and comprises a motor (29) coupled to at least one reducer coupled to a plurality of wheels (20, 21, 22, 23, 34, 25, 26) for winding or unwinding the cables (7, 7', 8, 8', 9, 9') of the assembly, wherein the multiple tension forces of the cables of the assembly provide a support against which the torque effect of the motor can be exerted, and wherein the reduction ratio of the reducer or reducers is provided with a deep gear ratio so as to minimise the torque effect produced by the rotation of the motor, so as to enable the torque effect induced by the motor to be compensated, in order to maintain the balance of the winch in said plane of the cables.

2. Dirigible airship according to claim 1, wherein the wheel diameters are set so as to allow balancing of the cable tensions.

3. Dirigible airship according to claim 1 or 2, wherein the winch is placed substantially between the cable laces of the assembly.

4. Steerable aircraft according to one of claims 1 to 3, wherein the winch comprises two axles (27, 28) driven by a single motor (29) mounted between the axles.

5. Dirigible airship according to one of the preceding claims, wherein a plurality of wheels are mounted coaxially.

6. Dirigible airship according to one of the preceding claims, wherein the winch comprises a worm screw reducer.

7. Dirigible airship according to one of claims 1 to 6, wherein the winch comprises pairs of wheels of substantially identical diameters for winding pairs of cables.

8. Dirigible airship according to one of claims 1 to 6, wherein the pairs of wheels have distinct diameters.

9. Dirigible airship according to one of the preceding claims, wherein the winch comprises an explosion-proof electric motor (29).

10. Dirigible airship according to one of the preceding claims, wherein at least one jack or at least one brake cooperating with one of the cables is adapted to vary the tension of said cable.

11. Dirigible airship according to one of the preceding claims, having two adjustment zones (4) which are substantially parallel to one another.

12. Dirigible airship according to claim 11, wherein the two adjustment zones (4) are substantially parallel to the longitudinal axis A-A of the aircraft.

13. Dirigible airship according to one of the preceding claims, further comprising the characteristics of an aerodyne.
